# EUROPÄISCHE PATENTSCHRIFT

(11) **EP 2 962 574 B1**
(45) Veröffentlichungstag und Bekanntmachung des Hinweises auf die Patenterteilung: **06.09.2017**
(21) Anmeldenummer: 14175375.6
(22) Anmeldetag: 02.07.2014
(51) Int. Cl.: A23C 3/033, A23C 3/04, A23C 3/037

(54) **Verfahren zur Herstellung von keimarmen Milchprodukten**
Process for the production of low-germ dairy products
Procedée pour la production de produits du lait etre pauvre en germes

(43) Veröffentlichungstag der Anmeldung: 06.01.2016
(73) Patentinhaber: DMK Deutsches Milchkontor GmbH, 27404 Zeven (DE)
(72) Erfinder: Döring, Sven-Rainer, 27404 Zeven (DE)
(74) Vertreter: Fabry, Bernd

(56) Entgegenhaltungen:
- DE-C1- 10 036 085
- MARIANNE HAMMERSHØJ ET AL: "Instant infusion pasteurisation of bovine milk. II. Effects on indigenous milk enzymes activity and whey protein denaturation", INTERNATIONAL JOURNAL OF DAIRY TECHNOLOGY, Bd. 63, Nr. 2, 1. Mai 2010 (2010-05-01), Seiten 197-208, XP055143743, ISSN: 1364-727X, DOI: 10.1111/j.1471-0307.2010.00583.x
- J. Andersen: "Chapter 12: Instant infusion: an introduction" In: "Thermal Technologies in Food Processing", 1. Januar 2001 (2001-01-01), Taylor & Francis, XP055143739, Seiten 229-240, * Seite 229, Absatz 1 - Seite 233, Absatz 5 *
- "The Premium Benefits of Steam Infusion UHT Treatment", , 1. Oktober 2012 (2012-10-01), Seiten 1-7, XP055143725, Gefunden im Internet: URL:http://www.spx.com/en/multimedia-libra ry/pdf/spx-brand-pdf/flow/apv/News_Event/2 012_10_29_Steam_Infusion_Editorial.pdf [gefunden am 2014-10-01]

## Beschreibung

### GEBIET DER ERFINDUNG

Die Erfindung befindet sich auf dem Gebiet der Milchprodukte und betrifft ein verbessertes Verfahren zu deren Entkeimung.

### STAND DER TECHNIK

Pasteurisierung bezeichnet die kurzzeitige Erwärmung von flüssigen oder pastösen Lebensmitteln auf Temperaturen bis 100 °C zur Abtötung von Mikroorganismen. Sie dient dazu, unter anderem Milch, Frucht- und Gemüsesäfte und andere Flüssigkeiten haltbar zu machen. Durch die kurze Zeitdauer der Hitzeeinwirkung und die mäßige Temperatur werden der Nährwert, der Geschmack und die Konsistenz des Lebensmittels nur unbedeutend verändert und dennoch die meisten Lebensmittelverderber wie Milchsäurebakterien und Hefen sowie viele krankheitserregende Bakterien wie Salmonellen zuverlässig abgetötet. Hitzeresistente Bakteriensporen wie die von *Clostridium botulinum,* die Erreger der Paratuberkulose sowie Schimmelpilzsporen überleben diese Behandlung zumindest teilweise. Aus diesem Grund sollte der Mikroorganismengehalt der Rohware möglichst gering gehalten werden. Am bekanntesten ist die Pasteurisierung von Milch, die hierzu 15 bis 30 Sekunden auf 72 bis 75 °C erhitzt und danach sofort wieder abgekühlt wird. Pasteurisierte Milch bleibt ungeöffnet bei 6 bis 7 °C gelagert etwa 6 bis 10 Tage genießbar. In Deutschland und der EU ist nach der europäischen Milchhygiene-Richtlinie die Pasteurisierung für alle gehandelten Milchsorten außer Roh- und Vorzugsmilch gesetzlich vorgeschrieben.

Bei der Pasteurisierung von Milch werden üblicherweise Plattenwärmeaustauscher eingesetzt. Durch Verbrennungsprozesse entstehen jedoch Ablagerungen an denen bei Temperaturen von 30 bis 55 °C thermoresistente Keime schnell und gerne wachsen; das gleiche trifft für Toträume in den Austauschern zu. Die Keime können sich innerhalb von 20 min jeweils verdoppeln und so können leicht Populationen von 6 Mio. Keimen/ml entstehen. Abgesehen von dem hygienischen Mangel können die Keime beispielsweise in der Käseherstellung durch Gasbildung zu Fehlbildungen führen: ganze Laibe können dabei aufgehen wie Luftballons. Durch Abgabe von Enzymen kann es auch zu sensorischen Belastungen kommen.

Die übliche Pasteurisierung folgt folgenden Schema: Die Rohmilch wird im ersten Wärmeaustauscher 30 bis 45 Sekunden von 6 auf 55 °C erhitzt. Im Separator wird dann bei dieser Temperatur innerhalb von 5 bis 10 Sekunden der Rahm abgetrennt. Anschließend wird die Magermilch innerhalb von 15 bis 30 Sekunden auf 72 °C erhitzt und bei dieser Temperatur im zweiten Wärmeaustauscher pasteurisiert. Innerhalb von 45 bis 60 Sekunden wird die pasteurisierte Milch dann wieder bis auf 8 °C abgekühlt. In Summe verbleibt die Milch aber über einen vergleichsweise langen Zeitraum im kritischen Temperaturfenster von 35 bis 55 °C, in dem Keimwachstum stattfindet.

Durch die Pasteurisierung sind diese Keime nicht zu töten. Auch die Fließgeschwindigkeit in den Bauteilen ist begrenzt, so dass ein Ausspülen der Keime nicht möglich ist. Eine Alternative wäre eine Ultrahocherhitzung, dabei würden aber die Molkenproteine denaturieren, so dass dies auch nicht in Frage kommt.

Aus dem Stand der Technik sind Verfahren bekannt, bei denen ein Teil der Keime schon vor der Pasteurisierung durch Mikrofiltrationsverfahren entfernt werden und so den Eindruck erwecken, es würden besonders keimarme Produkte erhalten. So ist stellvertretend für eine ganze Anzahl ähnlicher Druckschriften aus der EP 1656030 B1 (PARMALAT) beispielsweise ein Verfahren bekannt, bei dem der Pasteurisierung eine Filtration über eine engporige Membran vorgeschaltet ist, bei der das Permeat weiterverarbeitet und das bakterienbelastete Retentat verworfen wird. Für das eingangs beschriebene Problem bedeutet dies indes keine Lösung, denn die geringe Keimzahl im Permeat ist immer noch so hoch, dass sie unter den Bedingungen, die während der Behandlung im Wärmeaustauscher herrschen, so stark anwachsen können, dass wieder eine erhebliche Keimbelastung die Folge ist.

Aus der US 2002 012732 A1 (LINDQUIST) ist ein Verfahren bekannt, bei der man eine Magermilch einer Filtration unterwirft und dabei eine Permeat und ein Retentat erhält. Während das Permeat einer Wärmebehandlung unterworfen wird, wird das Retentat ein weiteres Mal filtriert und das dabei erhaltene zweite Permeat dem ersten Permeat zugesetzt. Das Verfahren erweist sich in der Praxis jedoch als viel zu aufwendig.

Gegenstand der US 6,372,276 B1 (LINDQUIST) ist ein Verfahren zur Erzeugung einer sterilen Milch, bei der Rohmilch zunächst filtriert und das so erhaltene Permeat anschließend in mehreren Stufen hitzebehandelt wird. Bei dieser Verfahrensdurchführung beobachtet man jedoch ein häufiges Verstopfen der Membranen, was zu ständigen Unterbrechungen im kontinuierlichen Verfahrensablauf führt, zudem werden die Keimzahlen nicht ausreichend reduziert. Ganz im Gegenteil wird hier ein Durchwachsen der Membranen beobachtet, denn da keine Konkurrenzflora vorliegt, wächst die Keimzahl exponentiell an.

Aus der DE 10 2009 006248 A1 (GEA) ist eine Vorrichtung in einem Infusionssystem für ein Lebensmittelprodukt, insbesondere ein Molkereiprodukt wie Milch, Sahne oder Joghurt bekannt, die eine von einem Infusorbehälter mit einem konischen Boden begrenzte Infusionskammer mit einem ersten Einlass für das zu erwärmende Lebensmittelprodukt in ihrem oberen Bereich und mit einem Auslass für das erwärmte Lebensmittelprodukt in ihrem unteren Bereich beinhaltet. Dabei ist der Produkteinlass so vorgesehen ist, dass das in die Infusionskammer eintretende Lebensmittelprodukt in Form kleiner Tröpfchen oder als Filmströmung aufgeteilt wird und die Infusionskammer als Fallströmung durchsetzt, und wobei die Infusionskammer einen zweiten Einlass für Dampf in ihrem oberen Bereich beinhaltet, der so vorgesehen ist, dass über die gesamte Verweilzeit des zu erwärmenden Lebensmittelprodukts in der Infusionskammer dieses in einen Wärmeaustausch mit dem Dampf tritt. Hammershøj et al. offenbart die Pasteurisierung von Vollmilch durch infusionserhitzung und nachfolgender Flashkühlung. Eine Wärmevorbehandlung findet nicht statt (Instant infusion pasteurisation of bovine milk. II. Effects on indigenous milk enzymes activity and whey protein denaturation. / Hammershøj, M; Hougaard, A B; Vestergaard, J S; Poulsen, O; Ipsen, R H. In: International Journal of Dairy Technology, Vol. 63, No. 2, 2010, p. 197-208).

Die Aufgabe der vorliegenden Erfindung hat somit darin bestanden, ein alternatives Verfahren zur zuverlässigen Entkeimung von Milchprodukten, speziell von Voll- und Magermilchprodukten zur Verfügung zu stellen, das frei von den eingangs geschilderten Nachteilen ist.

### BESCHREIBUNG DER ERFINDUNG

Ein erster Gegenstand der Erfindung betrifft Verfahren zur Herstellung von keimarmen Vollmilchprodukten, bei dem man
(a1) das zu entkeimende Milchprodukt einer Wärmevorbehandlung in einem Wärmeaustauscher unterwirft und auf Temperaturen im Bereich von 25 bis 30 °C erwärmt,
(a2) das vorbehandelte Milchprodukt durch Dampfinfusion auf Temperaturen von 50 bis 75 °C erhitzt und dabei pasteurisiert, und
(a3) das pasteurisierte Produkt durch Flashkühlung abkühlt.

Ein zweiter Gegenstand der Erfindung betrifft ein analoges Verfahren zur Herstellung von keimarmen Magermilchprodukten, bei dem man
(b1) das zu entkeimende Milchprodukt einer Wärmevorbehandlung in einem Wärmeaustauscher unterwirft und auf Temperaturen im Bereich von 25 bis 30 °C erwärmt,
(b2) das vorbehandelte Milchprodukt durch eine erste Dampfinfusion auf Temperaturen von 50 bis 60 °C erhitzt,
(b3) den Rahm abtrennt,
(b4) das entrahmte Milchprodukt durch eine zweite Dampfinfusion auf Temperaturen von 50 bis 75 °C erhitzt und dabei pasteurisiert, und
(b5) das pasteurisierte Produkt durch Flashkühlung abkühlt.

Beide Verfahren können kontinuierlich oder batchweise betrieben werden.

Die beiden Verfahren sind durch den gleichen erfinderischen Gedanken verbunden und unterscheiden sich nur darin, dass im ersten Fall eine Vollmilch und im zweiten eine Magermilch erhalten wird. Grundsätzlich ist das Verfahren jedoch auch für alle übrigen Milchprodukte geeignet, die eine Pasteurisierung benötigen.

Überraschenderweise wurde gefunden, dass sich durch die Kombination aus Infusion und Flashkühlung das Problem der langen Verweilzeit im für das Keimwachstum vorteilhaften Temperaturbereich zwischen 30 und 55 °C und insbesondere 35 bis 50 °C deutlich reduzieren lässt. Während übliche Pasteurisierungsverfahren eine Zeit zwischen 1 und 2 Minuten erfordern, lässt sich diese Zeitspanne gemäß vorliegender Erfindung um den Faktor 2 bis 4 verkürzen. Auf diese Weise kann die Keimbelastung von Milchprodukten deutlich reduziert werden.

### VORERWÄRMUNG

In einem ersten Schritt, wird die Rohmilch, die üblicherweise eine Temperatur zwischen 5 und 10 °C besitzt, einer Vorerwärmung auf Temperaturen im Bereich von 25 bis 30°C unterworfen. Dies kann in üblichen Plattenwärmeaustauschern erfolgen, wobei eine Erwärmung innerhalb von etwa 10 bis etwa 30 Sekunden auf etwa 25 °C stattfindet.

### INFUSION

Der erste essentielle Schritt des erfindungsgemäßen Verfahrens besteht darin, den kritischen Aufheizvorgang, d.h. das langsame Durchlaufen eines Temperaturbereiches, in dem mesophile und thermophile Sporen optimale Wachstumsbedingungen vorfinden, durch eine blitzartige Erwärmung zu verkürzen. Dies wird durch Dampfinfusion erreicht, bei der überhitzter Wasserdampf auf der Oberfläche des Milchproduktes kondensiert und dieses schlagartig erhitzt. Dieses Verfahren unterscheidet sich von der Dampfinjektion (Direct Steam Injection) also darin, dass der Dampf das Produkt nicht durchdringt, sondern ausschließlich an der Oberfläche bleibt.

Das Verfahren der Dampfinfusion ist seit den 1960er Jahren bekannt. Grundsätzlich kann die Erwärmung in zwei Schritten durchgeführt werden, wobei das zu erhitzende Gut in eine mit Heißdampf gefüllte Druckkammer eingedüst wird und die Erwärmung bzw. Pasteurisierung auf dem Fallweg der Tröpfchen erfolgt.

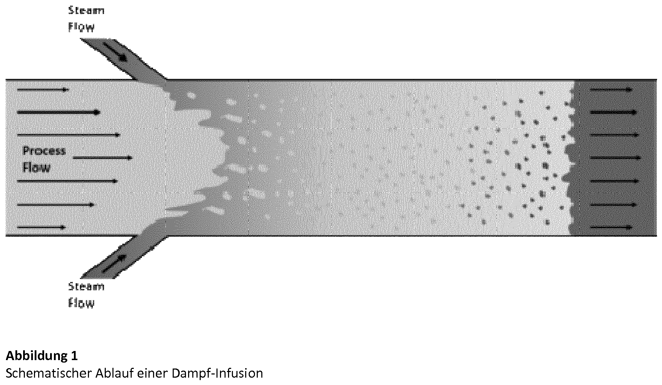

Seit dem Jahr 2000 hat indes der so genannte PDX-Prozess an Bedeutung gewonnen, der Schematisch in **Abbildung 1** wiedergegeben ist. Dabei wird das zu erwärmende Gut vaporisiert und in einem Strom überhitzten Wasserdampfs schlagartig erwärmt. Der sich mit Überschallgeschwindigkeit vorwärtsbewegende Dampfstrom verteilt die Produkttröpfchen homogen, so dass ein Mehrphasenstrom entsteht, wobei die Erhitzung schonend nur an den Grenzflächen der Tröpfchen stattfindet. Auf diese Weise gleichzeitig wird eine Kondensation der Tröpfchen bewirkt. Der Wasserdampf kann dabei eine Temperatur von etwa 100 bis etwa 250 °C und insbesondere etwa 120 bis etwa 150 °C aufweisen, die Infusion benötigt eine Zeit von typisch 1 bis 5 und insbesondere etwa 2 bis 3 Sekunden.

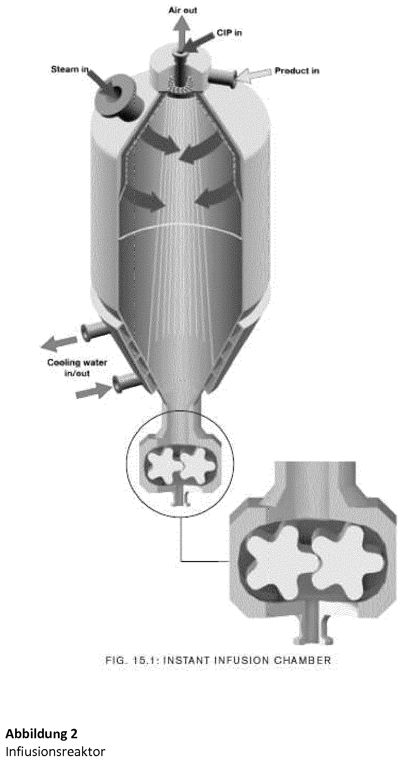

In **Abbildung 2** ist eine typische Infusionsvorrichtung wiedergegeben. Hier besteht die Besonderheit darin, dass die Infusionskammer am Auslass mit einer Zahnradpumpe versehen ist, mit der das erwärmte Produkt mit hoher Geschwindigkeit ausgefördert werden kann, damit es zu keinen Anbackungen kommt. Eine solche Vorrichtung wird beispielsweise von der SPX Corp. im Handel angeboten. Weitere Infusorbehälter können wie eingangs ausgeführt auch von der Firma GEA bezogen werden und sind beispielhaft in der Deutschen Patentanmeldung DE 10 2010 008448 A1 (GEA) beschrieben.

In einer weiteren bevorzugten Ausführungsform erfolgt die Infusionserwärmung dergestalt, dass Produkt und Dampf abwechselnd über konzentrische Ringdüsen in einen Reaktor versprüht werden, so dass von innen nach außen ein Dampfdruckgradient entsteht. Dadurch werden die Tröpfchen von der Wandung ferngehalten und können nicht verbrennen.

Die Beschreibung der Infusion trifft jeweils für die Schritte (a2), (b2) und (b4) zu.

### ENTRAHMUNG

Die Entrahmung der Milch findet dann statt, wenn Magermilch hergestellt werden soll. Dazu hat es sich als vorteilhaft erwiesen, den Rahm (etwa 4 Gew.-% der Gesamtmasse an Rohmilch) bei nicht zu hohen Temperaturen abzutrennen und dabei vorzugsweise 60 °C nicht zu überschreiten, weil es ansonsten zu Qualitätsverlusten kommt. Dieser Prozessschritt kann in Standard-Separatoren durchgeführt werden, die aus dem Stand der Technik hinreichend bekannt sind. In der Milchindustrie sehr verbreitet sind Separatoren der Firma GEA Westfalia Separator GmbH, (http://www.westfalia-separator.com/de/anwendungen/molkereitechnik/milchmolke.html). Entsprechende Bauteile sind beispielsweise auch in der DE 10036085 C1 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.

### FLASHKÜHLUNG

Ein zweiter essentieller Schritt des erfindungsgemäßen Verfahrens besteht darin, auch beim Abkühlen den für das Keimwachstum kritischen Temperaturbereich möglichst schnell zu durchlaufen. Hierzu hat sich eine Flashkühlung als besonders wirksam erwiesen

Unter dem Begriff Flashkühlung versteht man ein Verfahren, bei dem das heiße flüssige Produkt unter turbulenten Strömungsbedingungen in einen unter verminderten Druck stehenden Reaktor "eingeflasht" wird, so dass der Siedepunkt des Wassers unter 30 °C abgesenkt wird. Zur Unterstützung kann der Mantel des Flashreaktors zusätzlich noch gekühlt werden. Eine entsprechende Verfahrensbeschreibung bezogen auf die Abkühlung einer Polymerzubereitung wird beispielsweise in der EP 1116728 B1 (WOLFF CELLULOSICS) beschrieben.

Die Abkühlung der pasteurisierten Voll- oder Magermilch, wie sie in den Schritten (a3) und (b5) vorgesehen ist, benötigt etwa 1 bis 5 Sekunden, wobei die Endtemperatur üblicherweise bei etwa 25 bis etwa 30 °C liegt.

### NACHKÜHLUNG

Wird der Mantel des Flashreaktors zusätzlich gekühlt, kann die Austrittstemperatur der pasteurisierten Milch unter 10 °C liegen. In diesem Fall ist eine weitere Kühlstufe nicht erforderlich. Verlässt die Milch den Reaktor wie typisch mit etwa 25 °C, dann schließt sich jedoch vorzugsweise eine weitere Abkühlung auf etwa 5 bis 10 °C an, die wieder in einem Plattenwärmeaustauscher erfolgen kann, weil unter diesen Bedingungen kein Wachstum von unerwünschten Keimen beobachtet wird.

### BEISPIELE

### Beispiel 1

### Herstellung von pasteurisierter Magermilch

Rohmilch wurde auf 6 °C abgekühlt und mit Hilfe eines Plattenwärmeaustauschers innerhalb von 15 Sekunden auf 25 °C erwärmt. Die vorgewärmte Milch wurde durch eine erste Infusion innerhalb von 1 Sekunde auf 55 °C erhitzt und dann in einen Separator geleitet, in dem der Rahm abgetrennt wurde. Die entrahmte Milch wurde durch eine zweite Infusion innerhalb von 2 Sekunden auf 72 °C erhitzt und pasteurisiert. Anschließend wurde die pasteurisierte Milch mit turbulenter Strömung in einen Reaktor eingesprüht und der Druck dabei so weit herabgesetzt, dass sich das Produkt innerhalb von 5 Sekunden bis auf 25 °C abkühlte. Das austretende Produkt wurde anschließend in einem Plattenwärmeaustauscher bis auf 8 °C abgekühlt. Die resultierende Magermilch war praktisch frei von mesophilen und thermophilen Sporen.

### Vergleichsbeispiel V1

### Herstellung von pasteurisierter Magermilch

Rohmilch wurde auf 6 °C abgekühlt und mit Hilfe eines Plattenwärmeaustauschers innerhalb von 40 Sekunden auf 55 °C erwärmt. Die vorgewärmte Milch wurde in einen Separator geleitet, in dem der Rahm abgetrennt wurde. Die so erhaltene Magermilch wurde in einem zweiten Plattenwärmeaustauscher innerhalb von 15 Sekunden bis auf 72 °C erhitzt und pasteurisiert. Anschließend wurde die pasteurisierte Milch in einem dritten Wärmeaustauscher bis auf 8 °C abgekühlt. abgekühlt. Die resultierende Magermilch befand sich zwar innerhalb der EU-Spezifikation, wies jedoch pro ml rund 500 mesophile und thermophile Sporen auf.

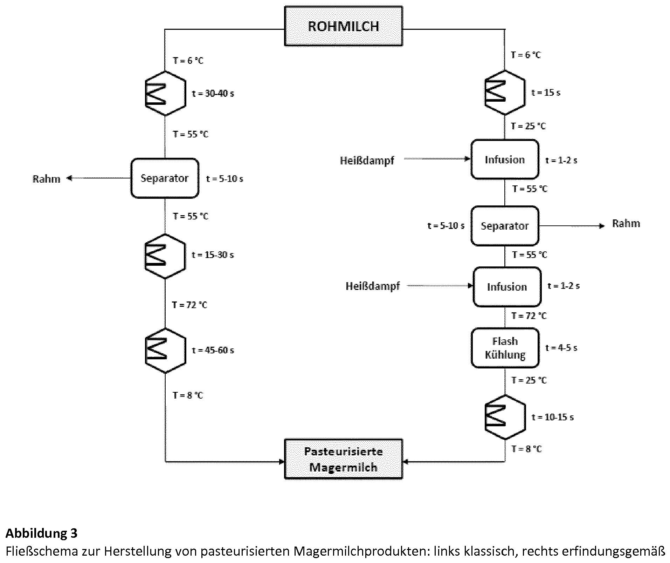

Die beiden Verfahren werden in der nachfolgenden **Abbildung 3** noch einmal an Hand eines Ablaufdiagramms einander gegenübergestellt.

## Patentansprüche

1. Verfahren zur Herstellung von keimarmen Milchprodukten, bei dem man
(a1) das zu entkeimende Milchprodukt einer Wärmevorbehandlung in einem Wärmeaustauscher unterwirft und auf Temperaturen im Bereich von 25 bis 30 °C erwärmt,
(a2) das vorbehandelte Milchprodukt durch Dampfinfusion auf Temperaturen von 50 bis 75 °C erhitzt und dabei pasteurisiert, und
(a3) das pasteurisierte Produkt durch Flashkühlung abkühlt.

2. Verfahren zur Herstellung von keimarmen Milchprodukten, bei dem man
(b1) das zu entkeimende Milchprodukt einer Wärmevorbehandlung in einem Wärmeaustauscher unterwirft und auf Temperaturen im Bereich von 25 bis 30 °C erwärmt,
(b2) das vorbehandelte Milchprodukt durch eine erste Dampfinfusion auf Temperaturen von 50 bis 60 °C erhitzt,
(b3) den Rahm abtrennt,
(b4) das entrahmte Milchprodukt durch eine zweite Dampfinfusion auf Temperaturen von 50 bis 75 °C erhitzt und dabei pasteurisiert, und
(b5) das pasteurisierte Produkt durch Flashkühlung abkühlt.

3. Verfahren nach den Ansprüchen 1 oder 2, **dadurch gekennzeichnet, dass** es kontinuierlich durchgeführt wird.

4. Verfahren nach den Ansprüchen 1 oder 2, **dadurch gekennzeichnet, dass** es batchweise durchgeführt wird

5. Verfahren nach den Ansprüchen 1 oder 2, **dadurch gekennzeichnet, dass** man die Milchprodukte in einem Wärmetauscher (Schritte a1 bzw. b1) über einen Zeitraum von 10 bis 30 Sekunden erwärmt.

6. Verfahren nach den Ansprüchen 1 oder 2, **dadurch gekennzeichnet, dass** man die Dampfinfusion mit hocherhitzten Wasserdampf durchführt (Schritte a2, b2, b4), der eine Temperatur im Bereich von 100 bis 250 °C aufweist.

7. Verfahren nach den Ansprüchen 1 oder 2, **dadurch gekennzeichnet, dass** man die Dampfinfusion (Schritte a2, b2, b4) über einen Zeitraum von 1 bis 5 Sekunden durchführt.

8. Verfahren nach den Ansprüchen 1 oder 2, **dadurch gekennzeichnet, dass** man die pasteurisierten Produkte (Schritte a3, b5) über einen Zeitraum von 1 bis 5 Sekunden abkühlt.

9. Verfahren nach den Ansprüchen 1 oder 2, **dadurch gekennzeichnet, dass** man die pasteurisierten Produkte (Schritte a3, b5) auf eine Temperatur von 25 bis 30 °C abkühlt.

10. Verfahren nach den Ansprüchen 1 oder 2, **dadurch gekennzeichnet, dass** man die vorgekühlten Produkte abschließend in einem Wärmeaustauscher auf eine Temperatur von 5 bis 10 °C abkühlt.

## Claims

1. A process for producing low microbial count milk products, comprising the following steps:
(a1) subjecting a milk product to be reduced in microbes to a temperature treatment in a heat exchanger and heating to temperatures in the range from 25 to 30 °C,
(a2) heating and simultaneously pasteurizing the pretreated milk product to 50 to 75 °C via steam infusion, and
(a3) cooling the pasteurized product by flash cooling.

2. A process for producing low microbial count milk products, comprising the following steps:
(b1) subjecting a milk product to be reduced in microbes to a temperature treatment in a heat exchanger and heating to temperatures in the range from 25 to 30 °C,
(b2) heating the pretreated milk product to 50 to 60 °C by a first steam infusion,
(b3) separating off the cream,
(b4) heating and simultaneously pasteurizing the skimmed milk product to a temperature from 50 to 75 °C by a second steam infusion, and
(b5) cooling the pasteurized product by flash cooling.

3. The process according to claims 1 or 2, **characterized in that** the process is conducted continuously.

4. The process according to claims 1 or 2, **characterized in that** the process is conducted batchwise.

5. The process according to claims 1 or 2, **characterized in that** the milk products are heated in a plate heat exchanger (steps a1 or b1) for 10 to 30 seconds.

6. The process according to claims 1 or 2, **characterized in that** the steam infusion is carried out using super-heated steam (steps a2, b2, b4) which has a temperature from 100 to 250 °C.

7. The process according to claims 1 or 2, **characterized in that** the steam infusion (steps a2, b2, b4) is carried out over a period from 1 to 5 seconds.

8. The process according to claims 1 or 2, **characterized in that** the pasteurized products (steps a3, b5) are cooled over a period from 1 to 5 seconds.

9. The process according to claims 1 or 2, **characterized in that** the pasteurized products (steps a3, b5) are cooled to a temperature from 25 to 30 °C.

10. The process according to claims 1 or 2, **characterized in that** precooled products are finally cooled to a temperature from 5 to 10 °C using a plate heat exchanger.

## Revendications

1. Procédé pour la fabrication de produits laitiers pauvres en germes, dans lequel
(a1) on soumet le produit laitier dont la teneur en germes doit être réduite à un prétraitement thermique dans un échangeur thermique et on le chauffe à des températures dans la plage de 25 à 30 °C,
(a2) on chauffe le produit laitier prétraité, par injection de vapeur, jusqu'à des températures de 50 à 75 °C, et ainsi on le pasteurise, et
(a3) on refroidit par refroidissement rapide le produit pasteurisé.

2. Procédé pour la fabrication de produits laitiers pauvres en germes, dans lequel
(b1) on soumet le produit laitier dont la teneur en germes doit être réduite à un prétraitement thermique dans un échangeur thermique et on le chauffe à des températures dans la plage de 25 à 30 °C,
(b2) on chauffe le produit laitier prétraité, par une première injection de vapeur, jusqu'à des températures de 50 à 60 °C,
(b3) on sépare la crème,
(b4) on chauffe le produit laitier écrémé, par une seconde injection de vapeur, jusqu'à des températures de 50 à 75 °C, et ainsi on le pasteurise, et
(b5) on refroidit par refroidissement rapide le produit pasteurisé.

3. Procédé selon la revendication 1 ou 2, **caractérisé en ce qu'**il est effectué en continu.

4. Procédé selon la revendication 1 ou 2, **caractérisé en ce qu'**il est effectué en mode discontinu.

5. Procédé selon la revendication 1 ou 2, **caractérisé en ce qu'**on chauffe les produits laitiers dans un échangeur thermique (étapes a1 ou b1) pendant une durée de 10 à 30 secondes.

6. Procédé selon la revendication 1 ou 2, **caractérisé en ce qu'**on effectue l'injection de vapeur avec de la vapeur d'eau à haute température (étapes a2, b2, b4), qui présente des températures dans la plage de 100 à 250 °C.

7. Procédé selon la revendication 1 ou 2, **caractérisé en ce qu'**on effectue l'injection de vapeur (étapes a2, b2, b4) pendant une durée de 1 à 5 secondes.

8. Procédé selon la revendication 1 ou 2, **caractérisé en ce qu'**on refroidit les produits pasteurisés (étapes a3, b5) pendant une durée de 1 à 5 secondes.

9. Procédé selon la revendication 1 ou 2, **caractérisé en ce qu'**on refroidit les produits pasteurisés (étapes a3, b5) jusqu'à une température de 25 à 30 °C.

10. Procédé selon la revendication 1 ou 2, **caractérisé en ce qu'**ensuite on refroidit les produits pré-refroidis, jusqu'à une température de 5 à 10 °C dans un échangeur thermique.
